# EUROPÄISCHE PATENTANMELDUNG

(11) **EP 3 700 055 A1**
(43) Veröffentlichungstag der Anmeldung: **26.08.2020**
(21) Anmeldenummer: 19159008.2
(22) Anmeldetag: 25.02.2019
(51) Int. Cl.: H02J 13/00, H02J 7/34, H02J 3/38

(54) **BETREIBEN EINER VORRICHTUNG IN EINEM ENERGIESYSTEM MITTELS SMART CONTRACTS**

(71) Anmelder: Siemens Gamesa Renewable Energy A/S, 7330 Brande (DK)
(72) Erfinder: Die Erfindernennung liegt noch nicht vor
(74) Vertreter: Aspacher, Karl-Georg

(57) **Zusammenfassung**

Die Erfindung betrifft ein Verfahren zum Betreiben einer Vorrichtung aus einer Vielzahl von Vorrichtungen (201-203) in einem Energiesystem (200). In einem mit dem Energiesystem (200) assoziierten verteilten Datenbanksystem (250) sind Smart Contracts für die Vielzahl von Vorrichtungen (201-203) vorgesehen. Die Smart Contracts umfassen vorrichtungsspezifische Informationen für die entsprechenden Vorrichtungen. Das Verfahren (400) umfasst ein Erfassen (401) von mindestens einer aktuellen Betriebsgröße der Vorrichtung und ein Einstellen (402) eines Betriebszustands der Vorrichtung in Abhängigkeit von der mindestens einen aktuellen Betriebsgröße und Informationen des Smart Contracts der Vorrichtung und Informationen des Smart Contracts von mindestens einer weiteren Vorrichtung der Vielzahl von Vorrichtungen (201-203). Das Verfahren (400) umfasst weiterhin ein Eingeben (403) des Betriebszustands der Vorrichtung das verteilte Datenbanksystem.

## Beschreibung

Die vorliegende Erfindung betrifft ein Verfahren zum Betreiben einer Vorrichtung aus einer Vielzahl von Vorrichtungen in einem Energiesystem, insbesondere zum Betreiben von elektrischen Vorrichtungen in einem elektrischen Energieversorgungssystem.

### Stand der Technik

In Energiesystemen, beispielsweise elektrischen Energieversorgungssystemen, stehen eine Vielzahl von Vorrichtungen miteinander in Verbindung, beispielsweise energieerzeugende Vorrichtungen, Energiespeichervorrichtungen, energieübertragende Vorrichtungen und energieverbrauchende Vorrichtungen. Energieerzeugende Vorrichtungen umfassen neben den klassischen Kraftwerken, welche auf fossilen Brennstoffen oder Kernreaktionen basieren, zunehmend Kraftwerke, welche auf regenerativen oder erneuerbaren Energiequellen beruhen, beispielsweise Windkraftwerke, Gezeitenkraftwerke, Wasserkraftwerke, geothermische Kraftwerke und Solarkraftwerke.

In einem Energieversorgungsnetz wird üblicherweise angestrebt, dass zu jedem Zeitpunkt die aktuell bereitgestellte Energie an den aktuellen Energiebedarf angepasst ist. Insbesondere mit der Einbeziehung von erneuerbaren oder regenerativen Energiequellen in das Energiesystem wird diese Aufgabe zunehmend schwieriger. Die Energieerzeugung auf der Grundlage erneuerbarer oder regenerativer Energiequellen ist größeren Veränderungen und Schwankungen unterworfen und eine Vorhersage dieser Veränderungen und Schwankungen ist komplex. Auch die Energieverbraucherseite wird zunehmend komplexer, beispielsweise durch moderne Industrieanlagen, welche in der Lage sind, Energie flexibler zu beziehen. Darüber hinaus entstehen neue Energiespeichermöglichkeiten, beispielsweise dezentrale Speicherkapazitäten in beispielsweise Elektrofahrzeugen und Pufferbatterien.

Unausgeglichenheiten in dem Energiesystem können zu höheren Kosten für Stabilisierungsmechanismen, wie zum Beispiel Energiebeschränkungen, Energieumverteilungen und unfreiwilligen Lastabwürfen. Insbesondere betrifft dies beispielsweise eine flexible Energieerzeugung, einen Betrieb des Energiesystems, wirtschaftliche Betrachtungen, eine Lastverwaltung, eine Energiespeicherung, eine Energiewandlung (zum Beispiel elektrische Energie in Gas) und eine Verwaltung des Energieübertragungsnetzes.

Üblicherweise werden Energiesysteme unter Berücksichtigung eines komplexen Regelwerks, Prozessen und Marktrollen verwaltet. Obwohl das Systemdesign stark reguliert und damit beispielsweise landesspezifisch ist, findet man in einem gemeinsamen Konzept für alle etablierten (freien) Märkte üblicherweise Aspekte zu einem Handels- und Portfoliomanagement, einer Bilanzierung und Abwicklung sowie einem Netzbetrieb. Zu dem Handels- und Portfoliomanagement gehören beispielsweise zentrale Handelsbörsen für den Energiehandel, bestimmte Produkte (z.B. Spitzenlasten, Basislasten), Terminierungsmechanismen, ein Portfoliomanagement durch zentrale Versorgungsunternehmen, Standardlastprofile, Berichtspflichten und Informationsflüsse zu zentralen Marktteilnehmern (zum Beispiel Übertragungssystembetreiber (TSO) und unabhängige Systembetreiber(ISO)). Die Bilanzierung und Abwicklung betrifft beispielsweise zentral verwaltete Zeitpläne, eine zentrale Abrechnung und Bilanzierung, eine zentrale Speicherung von Messdaten sowie die Berücksichtigung von Ausgleichsenergie, welche von zentralen Marktteilnehmern abgerechnet wird. Der Netzbetrieb betrifft eine zentrale Netzsteuerung sowohl auf der Ebene eines Übertragungssystembetreibers (TSO) als auch auf der Ebene eines Verteilungssystembetreibers (DSO), eine zentrale Kontrolle der Vermögenswerte und ein zentrales Reserveenergiemanagement. All dies kann zu relativ hohen Systemkosten führen.

### Zusammenfassung der Erfindung

Aufgabe der vorliegenden Erfindung ist es daher, den Betrieb eines Energiesystems zu verbessern, um insbesondere die oben beschriebenen Verwaltungsaufgaben zu vereinfachen und das Energiesystem effizienter zu nutzen.

Gemäß der vorliegenden Erfindung wird diese Aufgabe durch ein Verfahren zum Betreiben einer Vorrichtung aus einer Vielzahl von Vorrichtungen in einem Energiesystem, eine Vorrichtung in einem Energiesystem, ein Computerprogrammprodukt und einen elektronisch lesbaren Datenträger gemäß der unabhängigen Ansprüche gelöst. Die abhängigen Ansprüche definieren Ausführungsformen der Erfindung.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren", "steuern", "zuweisen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" oder "Vorrichtung" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren, Steuervorrichtungen und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" oder einer "Recheneinheit" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, dass der Prozessor Funktionen ausführt, um das erfindungsgemäße Verfahren oder einen Schritt des erfindungsgemäßen Verfahrens zu implementieren oder zu realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle, Schnittstellen zu Sensoren für eine Messdatenerfassung) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Smart-Contract-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft. Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" oder einer "Sicherheit von Daten" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" oder "Hinterlegen von Daten in der verteilten Datenbank" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensverfahren (engl. consensus algorithms) implementiert werden. Dies kann beispielsweise ein Konsensverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage und/oder eines Energieübertragungssystems und/oder eines Energieerzeugungssystems und/oder eines Energiespeichersystems und/oder eines Energieverbrauchers, die insbesondere auch ein Knoten des verteilten Datenbanksystems sind. Dabei können die Geräte beispielsweise Feldgeräte sein oder Geräte im Internet der Dinge (IoT) sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner", einer "Vorrichtung" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blockkette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreift und/oder von Knoten (z. B. mittels Smart Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart Contracts erfolgen, der insbesondere in einer Transaktion des verteilten Datenbanksystems gespeichert ist.
[1]
   Andreas M. Antonopoulos "Mastering Bitcoin: Unlocking Digital Cryptocurrencies", O'Reilly Media, December 2014
[2]
   Roger M. Needham, Michael D. Schroeder "Using encryption for authentication in large networks of computers" ACM: Communications of the ACM. Band 21, Nr. 12 Dezember 1978,
[3]
   Ross Anderson "Security Engineering. A Guide to Building Dependable Distributed Systems" Wiley, 2001
[4]
   Henning Diedrich "Ethereum: Blockchains, Digital Assets, Smart Contracts, Decentralized Autonomous Organizations", CreateSpace Independent Publishing Platform, 2016
[5]
   "The Ethereum Book Project/Mastering Ethereum" https://github.com/ethereumbook/ethereumbook, Stand 5.10.2017
[6]
   Leemon Baird
   "The Swirlds Hashgraph Consensus Algorithm: Fair, Fast, Byzantine Fault Tolerance", Swirlds Tech Report SWIRLDS-TR-2016-01, 31.5.2016
[7]
   Leemon Baird
   "Overview of Swirlds Hashgraph", 31.5.2016
[8]
   Blockchain Oracles https://blockchainhub.net/blockchain-oracles/ Stand 14.03.2018

Gemäß einer Ausführungsform wird ein Verfahren zum Betreiben einer Vorrichtung in einem Energiesystem bereitgestellt. Die Vorrichtung ist eine Vorrichtung aus einer Vielzahl von Vorrichtungen in dem Energiesystem. Das Energiesystem kann ein Energieverteilungsnetz sein, beispielsweise ein öffentliches Energieverteilungsnetz oder ein Mikronetz. Die Vorrichtungen können Knoten des Energiesystems sein. Die Vorrichtungen können beispielsweise Energieerzeugungsvorrichtung, Energieverteilungsvorrichtung, Energiespeichervorrichtungen oder Energieverbrauchsvorrichtungen sein. In einem mit dem Energiesystem assoziierten verteilten Datenbanksystem sind für die Vielzahl von Vorrichtungen Smart Contracts vorgesehen. Das verteilte Datenbanksystem kann mithilfe eines Datennetzes, an welches die Vorrichtungen angeschlossen werden können, realisiert werden. Beispielsweise kann für jede Vorrichtung ein entsprechender Smart Contract vorgesehen sein. Die Smart Contracts umfassen vorrichtungsspezifische Informationen für die entsprechende Vorrichtung. Bei dem Verfahren wird mindestens eine aktuelle Betriebsgröße der Vorrichtung erfasst und in Abhängigkeit von der mindestens einen aktuellen Betriebsgröße und Informationen des Smart Contracts der Vorrichtung und Informationen des Smart Contracts von mindestens einer weiteren Vorrichtung der Vielzahl von Vorrichtungen ein Betriebszustand der Vorrichtung eingestellt. Ferner wird der Betriebszustand der Vorrichtung in das verteilte Datenbanksystem eingegeben. Der Betriebszustand kann gemäß einer in dem Smart Contract der Vorrichtung definierten Regelung in das verteilte Datenbanksystem eingegeben werden. Zusätzlich kann die mindestens eine aktuelle Betriebsgröße gemäß einer in dem Smart Contract der Vorrichtung definierten Regelung in das verteilte Datenbanksystem eingegeben werden

Das verteilte Datenbanksystem kann beispielsweise eine Blockchain basierte Datenbank sein. Jeder Block der Blockchain enthält beispielsweise einen kryptographisch sicheren Hashwert des jeweils vorhergehenden Blocks, was als die Verkettungsprüfsumme anzusehen ist. Mit anderen Worten werden durch eine Verkettungsprüfsumme verschiedene Datenblöcke, welche in der verteilten Datenbank gespeichert sind, derart miteinander verknüpft, dass es (nahezu) unmöglich ist, nur einen dieser Datenblöcke zu verändern, ohne dass dies anhand der Verkettungsprüfsumme bemerkbar ist.

Beispielsweise können Veränderungen im Smart Contract der Vorrichtung im verteilten Datenbanksystem unveränderbar protokoliert werden. Dadurch können die vorrichtungsspezifischen Informationen einer Vorrichtung anderen Vorrichtungen zugänglich gemacht werden, ohne dass die Gefahr besteht, dass diese vorrichtungsspezifischen Informationen verfälscht werden und somit die anderen Vorrichtungen auf der Grundlage von unzuverlässigen Informationen arbeiten. Ferner sind sämtliche Änderungen des Betriebsverhaltens der Vorrichtungen nachvollziehbar, wodurch beispielsweise Fehlerzustände in dem Energiesystem leichter nachvollziehbar sind. Darüber hinaus kann beispielsweise eine kryptographische Währung in Verbindung mit dem verteilten Datenbanksystem verwendet werden, um von einer Vorrichtung geleistete Dienste zu vergüten oder um von einer Vorrichtung bezogene Dienste zu bezahlen.

Bei einer weiteren Ausführungsform definiert die vorrichtungsspezifische Information eines jeweiligen Smart Contracts eine regulatorische Anforderung an die entsprechende Vorrichtung. Regulatorische Anforderungen können von sogenannten "Regulatoren" vorgegeben werden, beispielsweise von einer Energiesystembehörde, z.B. einer regionalen oder nationale Behörde, oder einem Energienetzbetreiber oder einem Verband von Energienetzbetreibern. Regulatorische Anforderungen können regional unterschiedlich sein. Mittels der Smart Contracts können den Vorrichtungen auf einfache Art und Weise die regulatorischen Anforderungen zugänglich gemacht werden und Änderungen der regulatorischen Anforderungen schnell und zuverlässig an die Vorrichtungen verteilt werden.

Die regulatorische Anforderungen können eine oder mehrere der folgenden Eigenschaften der entsprechenden Vorrichtung betreffen:
- eine Netzfrequenz, mit welcher elektrische Energie von der Vorrichtung bereitzustellen ist oder mit welcher der Vorrichtung elektrische Energie zugeführt wird;
- einen zulässigen Spannungsbereich einer Spannung, mit welcher elektrische Energie von der Vorrichtung bereitzustellen ist oder mit welcher der Vorrichtung elektrische Energie zugeführt wird;
- Schnittstellen der Vorrichtung, z.B. Diagnoseschnittstellen und Steuerschnittstellen;
- eine Anforderung an eine Meldung von der Vorrichtung, beispielsweise ein Meldungsformat oder eine Meldungshäufigkeit; und/oder
- eine Anforderung an einen Dienst der Vorrichtung, beispielsweise eine Mindestbetriebsdauer oder einen Zeitraum, zu welchem von der Vorrichtung elektrische Energie bereitzustellen ist.

Bei einer weiteren Ausführungsform definiert die vorrichtungsspezifische Information eines jeweiligen Smart Contracts physikalische Eigenschaften und/oder Größen der entsprechenden Vorrichtung. Auf diese Art und Weise können beispielsweise aktuelle Messgrößen und Betriebszustände der Vorrichtung anderen Vorrichtungen bereitgestellt werden.

Beispielsweise kann die vorrichtungsspezifische Information ein oder mehrere Eigenschaften der entsprechenden Vorrichtung betreffen, beispielsweise:
- eine Leistungskurve,
- eine Vorhersage für eine Energiebereitstellung,
- einen Wartungsplan,
- eine Ladungskapazität,
- einen Ladestatus,
- eine Ladezyklusanzahl,
- eine Ladegeschwindigkeit, und/oder
- eine maximale Leistungsabgabe.

Gemäß einer weiteren Ausführungsform definiert die vorrichtungsspezifische Information eines jeweiligen Smart Contracts betreiberspezifische Anforderungen eines Betreibers der entsprechenden Vorrichtung. Somit kann ein Betreiber einer Vorrichtung auf einfache Art und Weise seine Bedingungen für den Betrieb seiner Vorrichtung den anderen Vorrichtungen bereitzustellen.

Zum Beispiel können die betreiberspezifischen Anforderungen eine oder mehrere der folgenden Eigenschaften betreffen:
- einen Energiepreis,
- ein Benutzerprofil,
- ein Handelsverhalten,
- eine zeitliche Verfügbarkeit der Vorrichtung, und/oder
- einen zum Handel verfügbaren Energieanteil.

Die Vorrichtung kann beispielsweise ein konventionelles Kraftwerk, eine Windkraftanlage, eine Photovoltaikanlage, eine Gezeitenkraftanlage, einen elektrischen Energiespeicher, und/oder ein Elektrofahrzeug mit einem elektrischen Energiespeicher umfassen. Weitere Beispiele für Vorrichtungen des Energiesystems können beispielsweise Energieverteilungsanlagen und Energieübertragungsanlagen, wie zum Beispiel Hochspannungsleitungen umfassen. Weiterhin können die Vorrichtungen industrielle oder private Energieverbraucher, insbesondere sogenannte Smart Devices, umfassen.

Gemäß einer weiteren Ausführungsform wird eine Vorrichtung in einem Energiesystem bereitgestellt. Die Vorrichtung ist eine Vorrichtung aus einer Vielzahl von Vorrichtungen in dem Energiesystem. In einem mit dem Energiesystem assoziierten verteilten Datenbanksystem sind Smart Contracts für die Vielzahl von Vorrichtungen vorgesehen. Beispielsweise ist für jede Vorrichtung ein Smart Contract vorgesehen. Die Smart Contracts umfassen vorrichtungsspezifische Informationen für die entsprechenden Vorrichtungen. Die Vorrichtung umfasst einen Anschluss an ein Datennetz, um Daten in das verteilte Datenbanksystem einzugeben und um Daten aus dem verteilten Datenbanksystem abzurufen, und eine Verarbeitungsvorrichtung. Die Verarbeitungsvorrichtung ist ausgestaltet, mindestens eine aktuelle Betriebsgröße der Vorrichtung zu erfassen, und einen Betriebszustand der Vorrichtung abhängig von der mindestens einen aktuellen Betriebsgröße und Informationen des Smart Contracts der Vorrichtung und Informationen des Smart Contracts von mindestens einer weiteren Vorrichtung der Vielzahl von Vorrichtungen einzustellen. Die Verarbeitungsvorrichtung ist ferner ausgestaltet, den Betriebszustand der Vorrichtung in das verteilte Datenbanksystem einzugeben.

Die Vorteile der Vorrichtung entsprechen im Wesentlichen den Vorteilen des zuvor beschriebenen Verfahrens, welche vorab im Detail ausgeführt worden sind, so dass hier auf eine Wiederholung verzichtet wird.

Des Weiteren wird gemäß einer Ausführungsform ein Computerprogrammprodukt bereitgestellt, insbesondere eine Software, welche man in einen Speicher einer programmierbaren Verarbeitungsvorrichtung bzw. einer Recheneinheit, welche mit einem Datennetz verbindbar ist, laden kann. Mit diesem Computerprogrammprodukt können alle oder verschiedene vorab beschriebene Ausführungsformen ausgeführt werden, wenn das Computerprogrammprodukt in der Verarbeitungsvorrichtung läuft. Dabei benötigt das Computerprogrammprodukt eventuell Programmmittel, z.B. Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere eine Software unter Schutz gestellt werden, mit welcher eine der oben beschriebenen Ausführungsformen ausgeführt werden kann bzw. welche diese Ausführungsform ausführt. Dabei kann es sich bei der Software um einen Quellcode (z.B. C++), der noch compiliert und gebunden oder der nur interpretiert werden muss, oder um einen ausführbaren Softwarecode handeln, der zur Ausführung nur noch in die entsprechende Verarbeitungsvorrichtung bzw. Recheneinheit zu laden ist. Teile oder Parameter der Software können auch in einem zugeordneten Smart Contract abgelegt sein und von der Verarbeitungsvorrichtung geladen und ausgeführt werden.

Schließlich wird gemäß einer Ausführungsform ein elektronisch lesbarer Datenträger bereitgestellt, z.B. eine DVD, ein Magnetband, eine Festplatte oder einen USB-Stick, auf welchem elektronisch lesbare Steuerinformationen, insbesondere Software (vgl. oben), gespeichert ist. Wenn diese Steuerinformationen (Software) von dem Datenträger gelesen und in eine Verarbeitungsvorrichtung bzw. Recheneinheit, welche mit einem Datennetz verbindbar ist, gespeichert werden, können alle Ausführungsformen des vorab beschriebenen Verfahrens durchgeführt werden.

### Kurze Beschreibung der Figuren

Im Folgenden wird die vorliegende Erfindung anhand von Ausführungsformen mit Bezug zu den Figuren im Detail beschrieben.
In Fig. 1 ist schematisch eine Blockchain gemäß einer Ausführungsform der Erfindung dargestellt.
In Fig. 2 ist schematisch eine Vorrichtung gemäß einer Ausführungsform der Erfindung dargestellt, welche an ein Datennetz angeschlossen ist.
In Fig. 3 ist schematisch ein Ablaufdiadramm eines Verfahrens gemäß einer Ausführungsform der Erfindung dargestellt.

### Detaillierte Beschreibung der Erfindung

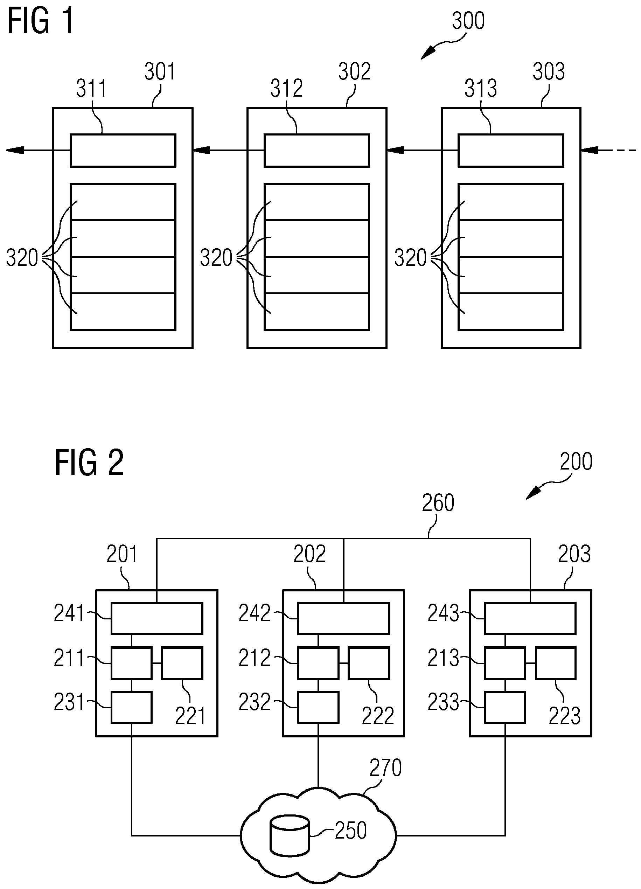

In Fig. 1 ist schematisch eine beispielhafte Blockchain 300 dargestellt. Die Blockchain 300 umfasst mehrere Datenblöcke 301-303, welche in Form einer Kette oder Folge von Datenblöcken 301-303 verknüpft sind. Jeder Datenblock 301-303 weist eine Verkettungsprüfsumme 311-313 auf, welche beispielsweise einen Hashwert darstellt. Die Prüfsumme 311-313 wird abhängig von dem jeweils vorhergehenden Datenblock innerhalb der Blockchain oder innerhalb der Folge von Datenblöcken 301-303 bestimmt. Beispielsweise wird die Prüfsumme 312 des Datenblocks 302 abhängig von dem Datenblock 301 gebildet, was durch den entsprechenden Pfeil in der Fig. 1 dargestellt wird. Die Prüfsumme 312 bzw. 313 des Datenblocks 302 bzw. 303 kann beispielsweise ein Hashwert sein, welcher anhand der in dem jeweils vorhergehenden Datenblock 301 bzw. 302 gespeicherten Daten berechnet wird. Dadurch kann eine (unautorisierte) Modifikation des Datenblocks 301 bzw. 302 erfasst werden, indem der Datenblock 301 bzw. 302 mit der Prüfsumme 312 bzw. 313 verglichen wird.

In jedem Datenblock 301-303 können Transaktionen 320 gespeichert sein. Jede Transaktion 320 kann entsprechende Daten beinhalten oder auf entsprechende Daten verweisen, indem ein entsprechender Verweis oder eine entsprechende Zusatzinformation oder eine entsprechende Prüfsumme usw. abgespeichert wird.

Die in den Datenblöcken 301-303 gespeicherten Daten (z.B. Transaktionen 320) können beispielsweise Versionsinformationen von in einem Datennetz gespeicherter Software oder Datenpaketen umfassen. Dadurch schützt die Blockchain 300 vor einer unautorisierten Modifikation der Versionsinformationen innerhalb des durch die Blockchain 300 geschützten Datennetzes.

Die in den Datenblöcken 301-303 gespeicherten Daten (z.B. Transaktionen 320) können Smart Contracts enthalten.

In Fig. 2 ist ein Energiesystem 200 dargestellt, welches eine Vielzahl von Vorrichtungen 201-203 umfasst, welche über ein Energieübertragungsnetzes 260 miteinander in Verbindung stehen. In der Fig. 2 sind lediglich drei Vorrichtungen 201-203 gezeigt, das Energiesystem 200 kann jedoch erheblich mehr Vorrichtungen umfassen, beispielsweise einige zig, einige hundert oder sogar einige tausend.

Jede der Vorrichtungen 201-203 umfasst eine Verarbeitungsvorrichtung 211-213, beispielsweise eine CPU, eine zugeordnete Speichereinheit 221-223 und einen zugeordneten Anschluss 231-233 zum Anschließen der Verarbeitungsvorrichtung 211-213 an ein Datennetz 270. Dem Energiesystem 200 ist ein verteiltes Datenbanksystem 250 zugeordnet, welches über die Verarbeitungsvorrichtung 211-213 und die Vernetzung der Verarbeitungsvorrichtung 211-213 über das Datennetz 270 realisiert wird. Über den Anschluss 231-233 an das Datennetz 270 kann die Verarbeitungsvorrichtung 211-213 Daten in das verteilte Datenbanksystem 250 eingeben und Daten aus dem verteilten Datenbanksystem 250 abrufen.

Jede der Vorrichtungen 201-203 umfasst ferner mindestens eine energietechnische Vorrichtung 241-243, welche mit dem Energieübertragungsnetz 260 verbunden ist. Die energietechnische Vorrichtung 241-243 kann beispielsweise eine Windkraftanlage, eine Solarkraftanlage, ein elektrischer Energiespeicher, wie zum Beispiel eine Pufferbatterie, eine Ladestation für ein Elektrofahrzeug, ein Elektrofahrzeug selbst, ein elektrischer Verbraucher in einem Industriebetrieb oder in einem Privathaushalt, ein konventionelles Kraftwerk (z.B. Kohlekraftwerke, Gaskraftwerk oder Atomkraftwerk) oder ein Verteilsystem eines Energieverteilungsnetzes, beispielsweise ein Umspannwerk, umfassen. Die energietechnische Vorrichtung 241-243 kann von der Verarbeitungsvorrichtung 211-213 überwacht und eingestellt werden. Beispielsweise kann die energietechnische Vorrichtung 241-243 Sensoren umfassen, welche aktuelle Betriebsdaten der energietechnischen Vorrichtung 241-243 an die Verarbeitungsvorrichtung 211-213 liefern. Ferner kann die energietechnische Vorrichtung 241-243 Aktuatoren und Konfigurationseingänge umfassen, welche mit Steuersignalen von der Verarbeitungsvorrichtung 211-213 angesteuert werden.

Jeder Vorrichtung 201-203 ist in dem verteilten Datenbanksystem 250 ein entsprechender Smart Contract vorgesehen. Der Smart Contract umfasst vorrichtungsspezifische Informationen für die entsprechende Vorrichtung 201-203.

Die Smart Contracts können Computerprotokolle sein, welche Verträge oder Verfahren abbilden oder überprüfen oder die Verhandlung oder Abwicklung eines Vertrags oder Verfahrens technisch unterstützen. Die implementierten Verfahren können beispielsweise eine Optimierung eines Betriebszustands der zugeordneten Vorrichtung 201-203 umfassen.

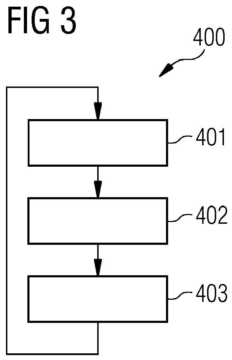

Das in Fig. 3 gezeigte und nachfolgend beschriebene Verfahren 400 wird auf einer oder mehreren der Verarbeitungsvorrichtung 211-213 ausgeführt. In der nachfolgenden Beschreibung wird beispielhaft anhand der Vorrichtung 201 das Verfahren beschrieben werden. Das Verfahren kann jedoch gleichzeitig oder zeitlich versetzt in jeder anderen Vorrichtung ausgeführt werden, beispielsweise in den Vorrichtungen 202 oder 203. Die in den Blöcken 401-403 beschriebenen Verfahrensschritte können kontinuierlich oder in Zeitschritten wiederholt durchgeführt werden.

In Block 401 wird mindestens eine aktuelle Betriebsgröße der Vorrichtung 201 erfasst. Die aktuelle Betriebsgröße kann beispielsweise eine aktuell lieferbare elektrischer Leistung oder eine aktuell verfügbaren Speicherkapazität der Vorrichtung 201 umfassen.

Im Block 402 wird ein Betriebszustand der Vorrichtung 201 eingestellt. Der Betriebszustand wird in Abhängigkeit von der mindestens einen aktuellen Betriebsgröße eingestellt. Ferner wird der Betriebszustand in Abhängigkeit von Informationen des Smart Contract der Vorrichtung 201 und zusätzlich in Abhängigkeit von Informationen des Smart Contracts von mindestens einer weiteren Vorrichtung des Energiesystems 200 eingestellt. Die mindestens eine weitere Vorrichtung kann beispielsweise die Vorrichtung 202 und/oder die Vorrichtung 203 sein. Die Einstellung des Betriebszustands der Vorrichtung 201 kann beispielsweise unter dem Gesichtspunkt einer Optimierung des aktuellen Betriebs der Vorrichtung 201 oder einer übergreifenden Optimierung von mehreren Vorrichtungen 201-203 erfolgen.

Im Block 403 wird der nun gültige Betriebszustand der Vorrichtung in das verteilte Datenbanksystem 250 eingegeben, beispielsweise in einen Block einer Blockchain. Eine Art und Weise, wie der nun gültige Betriebszustand in das verteilte Datenbanksystem eingegeben wird, kann in dem Smart Contract der Vorrichtung definiert sein. Zusätzlich kann auch die mindestens eine aktuelle Betriebsgröße in das verteilte Datenbanksystem 250 eingegeben werden, beispielsweise gemäß einer Regelung, die in dem Smart Contract der Vorrichtung definiert ist.

Zusammenfassend basiert das Verfahren auf dem dezentralen Datenbanksystem 250, insbesondere einem dezentralen Blockchain-System, für Energiemanagement und Systemoptimierung. Grundlegende Merkmale sind, dass alle teilnehmenden Vorrichtungen des Systems, nachfolgend auch als Teilnehmer bezeichnet, mit einem Blockchain-basierten Netzwerk verbunden sind. Jeder Teilnehmer hält einen oder mehrere Smart Contracts, die das Verhalten der Teilnehmer und seiner zugeordneten elektrischen Anlage innerhalb des Systems
beschreiben. Als wesentliches Merkmal des Blockchain-basierten Netzwerks sind alle relevanten Informationen, wie zum Beispiel Betriebsgrößen und Betriebszustände, im gesamten Netzwerk verfügbar und können gemeinsam genutzt werden, wodurch eine volle Transparenz für die Teilnehmer sichergestellt werden kann. Ferner werden die Daten sicher und unveränderlich gespeichert. Das System verfügt somit über eine dezentrale Steuerung. Der Smart Contract verfügt über eine Schnittstelle zur Steuerung der elektrischen Anlage, um die Kontrolle zu gewährleisten. Diese Schnittstelle
ist bidirektional. Somit können Zustände, Ist- oder Sollwerte abgefragt und eingestellt werden. Ferner kann eine Kryptowährung innerhalb des Systems als Zahlungssystem verwendet werden. Als Datennetz eignet sich sowohl ein öffentliches als auch ein privates Netzwerk, insbesondere ein Datenkommunikationsnetzwerk.

Bei dem Verfahren 400 kann somit eine zentrale Management- und/oder Kontrolleinheit im System durch eine dezentrale Steuerung ersetzt werden. Die dezentrale Steuerung wird durch das Blockchain-Netzwerk gewährleistet. Die Kontroll- und Managementmechanismen spiegeln sich in den spezifischen Regeln der Smart Contracts für jeden Teilnehmer des Systems wider. Das System kann somit autonom ein Betriebsoptimum für einen jeden Zeitschritt finden.

Bei einer dezentralen Optimierung ohne eine zentrale Steuerung können beispielsweise Konsensprinzipien angewendet werden. Folgende Aspekte können daher bei der Optimierung des Netzes und der Einstellung der jeweiligen Vorrichtung berücksichtigt werden.

Eine Konsensentscheidung ist eine Gruppenentscheidung. Es gibt verschiedene Ziele eines Konsensverfahrens, wie zum Beispiel:
- Suche nach einer Einigung: Ein Konsensmechanismus sollte dazu führen, dass die Gruppe so viel Zustimmung wie möglich findet;
- Kollaborativ: Alle Teilnehmer sollten darauf hinarbeiten, gemeinsam ein Ergebnis zu erzielen, welches das Interesse der Gruppe an erster Stelle setzt;
- Kooperativ: Alle Teilnehmer sollten nicht ihre eigenen Interessen in den Vordergrund stellen und eher zusammen als individuell arbeiten;
- Egalitär: Eine Gruppe, die versucht, einen Konsens zu finden, sollte so egalitär wie möglich sein. Das bedeutet im Grunde genommen, dass jede einzelne Stimme gleich gewichtet wird. Die Stimme eines Teilnehmers kann nicht wichtiger sein als die eines anderen;
- Inklusiv: So viele Teilnehmer wie möglich sollten in den Konsensprozess einbezogen werden;
- Partizipatorisch: Der Konsensmechanismus sollte so beschaffen sein, dass jeder Teilnehmer aktiv am Gesamtprozess teilnehmen sollte.

Ein Problem, das bei der Konsensfindung zu überwinden ist, wird häufig als das "Byzantinischen Generäle Problem" bezeichnet. Angenommen, einige Generäle wollen eine Stadt angreifen und haben zwei Probleme:
1. keine zentrale Instanz zur Steuerung von Armeen, und
2. angreifende Armeen können nur gewinnen, wenn alle Generäle ihre Kräfte aufeinander abstimmen.
Nachrichtenüberbringer werden für die Abstimmung der Generäle untereinander benötigt. Die Nachrichten können jedoch abgefangen, verändert oder vernichtet werden.

Eine vergleichbare Situation findet sich in einem großen Netzwerk bezogen auf übertragene Nachrichten. Teilnehmer können nicht sicher sein, ob ihre Nachricht nicht kompromittiert wurde. Eine Lösung für dieses Problem stellt die Verwendung einer Blockchain dar.

Eine Lösung für das Byzantinische Generäle Problem ist der "Nachweis der Arbeit" (englisch: "Proof of Work"). Der Nachweis der Arbeit umfasst, dass Teilnehmer, die einen nächsten (neuen) Datenblock (z.B. Smart Contract) erstellen wollen (sogenannte "Miner"), ein komplexes mathematisches Rätsel lösen. Der Rechenaufwand zur Lösung des Rätsels ist so groß, dass dieser Vorgang Rechenleistung und damit Geld kostet. Miner, die es gelöst haben, stellen es anderen zur Überprüfung zur Verfügung. Die Verifizierung ist ein sehr einfacher Prozess. Da es sehr schwierig ist, einen neuen Block zu erstellen und eine gewisse Zufälligkeit enthalten ist, ist es sehr wahrscheinlich, dass nicht immer derselbe Miner gewählt wird. So hat niemand eine diktatorische Macht. Die Überprüfung, ob ein Block oder die gesamte Kette gültig ist, ist eine sehr einfache Aufgabe. Mit dieser Technik ist es möglich, zu überprüfen, ob ein Datenblock (z.B. Smart Contract) auf seinem Weg kompromittiert wurde oder nicht.

Allgemein kein ein Smart Contract für eine Vorrichtung in einem Energiesystem beispielsweise drei verschiedene Abschnitte umfassen.

Ein erster Abschnitt betrifft beispielsweise regulatorische Anforderungen von beispielsweise einer Energiesystembehörde oder Energienetzbetreibern an die jeweilige Vorrichtung. Die Energiesystembehörde kann beispielsweise eine nationale staatliche Einrichtung oder ein landesweit arbeitender oder regionaler Verband von Energieversorgern sein. In dem ersten Abschnitt werden Regularien und Anforderungen für das Energiesystem spezifiziert. Die Regularien und Anforderungen können dazu dienen, die unter Umständen gegenläufigen Größen Umweltverträglichkeit, Energiesicherheit und Energiegerechtigkeit in gewünschte oder angestrebte Verhältnisse zu setzen. Die Energiegerechtigkeit kann beispielsweise eine Energiebezahlbarkeit und eine Energiezugänglichkeit umfassen. Die Energiesicherheit kann beispielsweise eine Zuverlässigkeit des Energiesystems betreffen, beispielsweise in Bezug auf Verfügbarkeit, Ausfallzeit und Redundanzen.

Die regulatorische Anforderungen können somit strategische Ziele eines Landes oder einer Region widerspiegeln und daher andere Kategorien außer Kraft setzen, um beispielsweise eine sichere Energieversorgung zu gewährleisten.

Die regulatorischen Anforderungen können weiterhin beispielsweise technische Spezifikationen, wie zum Beispiel eine Netzfrequenz oder zulässige Spannungsbereiche, Anforderungen an Meldungen und Nachrichten von der Vorrichtung, Schnittstellen der Vorrichtung und deren Verhalten sowie Anforderungen an von der Vorrichtung zu erbringenden Diensten umfassen.

Ein zweiter Abschnitt betrifft beispielsweise physikalische und technische Eigenschaften und Größen der Vorrichtung. Diese Eigenschaften und Größen können beispielsweise von dem Hersteller der Vorrichtung vorgegeben sein und/oder von der Vorrichtung aus einem aktuellen Betriebszustand abgeleitete Größen darstellen. Dies kann beispielsweise eine Leistungskurve, eine Vorhersage für eine Energiebereitstellung, einen Wartungsplan, eine Ladungskapazität, einen Ladestatus, eine Ladezyklusanzahl, eine Ladegeschwindigkeit und/oder eine maximale Leistungsabgabe betreffen.

In diesem Abschnitt können beispielsweise auch technische und betriebliche Grenzen und Merkmale der Vorrichtung von einem Hersteller definiert werden. Beispielsweise kann der Typ eines Windkraftgenerators definiert werden, z.B. eine doppelt gespeiste asynchrone Maschine (englisch: Double fed induction machine, DFIG), mag DD (direct drive), elec DD, Up-& Downwind, Multirotor, vertikale und horizontale Systeme, Helix, Airborne Systeme mit In-Air- oder On-Boden-Erzeugung (Kite-Systeme).

Im Bereich einer Solarenergieanlage kann der Typ oder die Bauform der Solarzellen, zum Beispiel Silizium, Perowskit, CIGS, CdTe, Organische oder Mehrfachsolarzellen, oder die Art von solarthermischen Systemen, zum Beispiel Parabolrinnen-, Fresnel-, Turm-, Stirling-System, definiert sein.

Ferner können Wechselrichtersysteme zur Unterstützung von Solarstromsystemen definiert sein.

Im Bereich von Untersee- und Meeresturbinen kann der Typ definiert sein, z.B. Gezeitenkraftwerk, Wellenkraftwerk oder Flusskraftwerk.

Ferner können Merkmale eines Biomassekraftwerks definiert sein.

Weitere Kraftwerke und deren Merkmale können in diesem Abschnitt definiert sein, zum Beispiel:
- Hydro-Systeme: Pumpspeicher, Flussströmung;
- Geothermie-Systeme: dampf- oder flüssigkeitsdominiert;
- Biomasseanlagen.

Bei Energiespeichersysteme können Art und weitere Merkmale definiert sein, beispielsweise:
- chemische Speichersysteme: Redox, Galvanisch, Lithium;
- Wärmespeichersysteme (z.B. ETES);
- mechanische Speichersysteme: kinetisch (z.B. Schwungrad), potential (z.B. Luftdruck);
- elektrische Speichersysteme: Kondensatoren, supraleitender magnetischer Speicher.

Ein dritter Abschnitt betrifft beispielsweise betreiberspezifische Informationen. Ein Betreiber der Vorrichtung kann beispielsweise ein Kunde des Energiesystems, ein Besitzer oder Eigentümer der Vorrichtung oder ein Betreiber der Vorrichtung sein. Jeder Betreiber kann individuelle Regeln für das Verhalten der Vorrichtung auf der Grundlage von individuellen Präferenzen definieren. Dies können beispielsweise Anforderungen oder Größen sein, welche ein Betreiber der Vorrichtung vorgibt, um beispielsweise einen zuverlässigen und wirtschaftlichen Betrieb der Vorrichtung sicherzustellen. Die betreiberspezifischen Informationen umfassen beispielsweise einen Energiepreis, welcher auch zeitabhängig sein kann, ein Benutzerprofil, ein Handelsverhalten, eine zeitliche Verfügbarkeit der Vorrichtung und/oder einen zum Handel verfügbaren Energieanteil.

Nachfolgend werden beispielhaft Ausgestaltungen von Smart Contracts von drei beispielhaften elektrischen Anlagen beschrieben werden.

Die erste beispielhafte elektrische Anlage betrifft eine Turbine einer Windkraftanlage. Die in dem Smart Contract hinterlegten regulatorischen Anforderungen an die Windkraftanlage können beispielsweise technische Anforderungen, wie zum Beispiel eine Netzspannung, eine Netzfrequenz und Hilfsdienste umfassen. Weiterhin können die regulatorischen Anforderungen an die Turbine der Windkraftanlage Anforderungen an Schnittstellen, beispielsweise Anforderungen an eine Steuerung und Überwachung der Vorrichtung (englisch: Supervisory Control and Data Acquisition, SCADA), sowie Leistungssollwerte umfassen. Ferner können die regulatorischen Anforderungen Anforderungen an einen Produktionsdatenbericht umfassen.

Die in dem Smart Contract hinterlegten technischen Eigenschaften und Größen der Turbine der Windkraftanlage können beispielsweise Leistungskurven, eine Erzeugungsvariabilität, eine Energiebereitstellungsvorhersage sowie Wartungspläne umfassen.

Insbesondere können in diesem Teil des Smart Contracts definiert sein:
- Betriebsbeschränkungen und Anlagenfähigkeiten, zum Beispiel: Betriebsleistungsbereiche (z.B. Nennleistung in kW), Blindleistungsbereiche, Frequenzbereiche, Spannungsbereiche, Frequenzänderungsrate, Spannungsasymmetrien, Frequenzregelung, aktive Leistungsregelung, Drehreserve, Blindleistungsregelung, Blindleistungsänderungsraten, Spannungsregelung, Leistungsspitzen, Trägheitsreaktion, synthetische Trägheitsreaktion, Reservewirk-/Blindleistung, ungeregelte Betriebsart, Startverhalten nach Stromausfall, Inselbetrieb und Resynchronisation;

- Betriebszustandsinformationen, zum Beispiel: Turbinenzustand (z.B. verfügbar, gestoppt, in Wartung), aktuelle Windgeschwindigkeit, aktuelle elektrische Leistung, aktuelle Blindleistung, aktuelle Frequenz, aktuelle Spannung und Ladezustand;
- allgemeine Vorrichtungsinformationen, zum Beispiel: Standortdetails und Turbinentyp;
- vorhergesagte Betriebseigenschaften, zum Beispiel: vorhergesagte Betriebsdetails für zukünftige Zeiträume (z.B. nächste 10min, nächste Stunde, usw.) und vorhergesagte Ausfallzeiten (z.B. durch planmäßige Wartung).

Die in dem Smart Contract hinterlegten betreiberspezifischen Informationen für die Turbine der Windkraftanlage können beispielsweise Energiepreise, ein Handelsverhalten und eine zeitliche Verfügbarkeit umfassen.

Die zweite beispielhafte elektrische Anlage betrifft ein elektrisches Fahrzeug, welches beispielsweise über eine Ladestation mit dem Energiesystem gekoppelt ist. Die in dem Smart Contract hinterlegten regulatorischen Anforderungen an das elektrische Fahrzeug können beispielsweise technische Anforderungen, wie zum Beispiel eine Netzspannung, eine Netzfrequenz und Hilfsdienste umfassen. Weiterhin können die regulatorischen Anforderungen Anforderungen an Schnittstellen, beispielsweise Anforderungen an eine Steuerung und Überwachung der Vorrichtung (englisch: Supervisory Control and Data Acquisition, SCADA), sowie Leistungssollwerte umfassen. Ferner können die regulatorischen Anforderungen Anforderungen an einen Produktionsdatenbericht umfassen. Die in dem Smart Contract hinterlegten technischen Eigenschaften und Größen des elektrischen Fahrzeugs können beispielsweise eine Ladungskapazität, Ladezyklen, einen zeitlichen Verlauf eines Ladestroms, einen zeitlichen Verlauf eines Entladestroms sowie einen Ladestatus einer Antriebsbatterie des elektrischen Fahrzeugs umfassen. Die in dem Smart Contract hinterlegten betreiberspezifischen Informationen können beispielsweise eine handelbare Menge der in der Antriebsbatterie verfügbaren elektrischen Energie, eine Preissensitivität und Nutzungsprofile umfassen.

Die dritte beispielhafte elektrische Anlage betrifft eine elektrische Energiespeichervorrichtung. Die in dem Smart Contract hinterlegten regulatorischen Anforderungen an die elektrische Energiespeichervorrichtung können beispielsweise technische Anforderungen, wie zum Beispiel eine Netzspannung, eine Netzfrequenz und Hilfsdienste sowie Netzunterstützungsdienste umfassen. Weiterhin können die regulatorischen Anforderungen Anforderungen an Schnittstellen, beispielsweise Anforderungen an eine Steuerung und Überwachung der Vorrichtung (englisch: Supervisory Control and Data Acquisition, SCADA), sowie Leistungssollwerte umfassen. Ferner können die regulatorischen Anforderungen Anforderungen an einen Produktionsdatenbericht umfassen. Die in dem Smart Contract hinterlegten technischen Eigenschaften und Größen der elektrischen Energiespeichervorrichtung können beispielsweise eine Ladungskapazität, Ladezyklen, einen zeitlichen Verlauf eines Ladestroms, einen Ladestatus, Kennlinien, maximale Eingangs- und Ausgangsleistungen, Ladungsvorhersagen, elektrische Verluste und Betriebsgrenzwerte (maximaler und minimaler Ladezustand) umfassen. Die in dem Smart Contract hinterlegten betreiberspezifischen Informationen können beispielsweise eine Preissensitivität und Nutzungsprofile umfassen.

## Patentansprüche

1. Verfahren zum Betreiben einer Vorrichtung aus einer Vielzahl von Vorrichtungen (201-203) in einem Energiesystem (200), wobei in einem mit dem Energiesystem (200) assoziierten verteilten Datenbanksystem (250) Smart Contracts für die Vielzahl von Vorrichtungen (201-203) vorgesehen sind, wobei die Smart Contracts vorrichtungsspezifische Informationen für die entsprechenden Vorrichtungen umfassen, wobei das Verfahren (400) umfasst:
- Erfassen (401) von mindestens einer aktuellen Betriebsgröße der Vorrichtung,
- Einstellen (402) eines Betriebszustands der Vorrichtung in Abhängigkeit von der mindestens einen aktuellen Betriebsgröße und Informationen des Smart Contracts der Vorrichtung und Informationen des Smart Contracts von mindestens einer weiteren Vorrichtung der Vielzahl von Vorrichtungen (201-203), und
- Eingeben (403) des Betriebszustands der Vorrichtung in das verteilte Datenbanksystem.

2. Verfahren nach Anspruch 1, wobei die vorrichtungsspezifische Information eines jeweiligen Smart Contracts eine Regelung zum Eingeben des Betriebszustands der Vorrichtung in das verteilte Datenbanksystem definiert.

3. Verfahren nach Anspruch 1 oder Anspruch 2, wobei die vorrichtungsspezifische Information eines jeweiligen Smart Contracts eine regulatorische Anforderung an die entsprechende Vorrichtung definiert.

4. Verfahren nach Anspruch 3, wobei die regulatorische Anforderung eine oder mehrere der folgenden Eigenschaften der entsprechenden Vorrichtung betrifft:
- eine Netzfrequenz,
- einen zulässigen Spannungsbereich,
- eine Schnittstelle der Vorrichtung,
- eine Anforderung an eine Meldung von der Vorrichtung, und/oder
- eine Anforderung an einen Dienst der Vorrichtung.

5. Verfahren nach einem der vorhergehenden Ansprüche, wobei die vorrichtungsspezifische Information eines jeweiligen Smart Contracts eine physikalische Eigenschaft und/oder Größe der entsprechenden Vorrichtung definiert.

6. Verfahren nach einem der vorhergehenden Ansprüche, wobei die vorrichtungsspezifische Information ein oder mehrere der folgenden Eigenschaften der entsprechenden Vorrichtung betrifft:
- eine Leistungskurve,
- eine Vorhersage für eine Energiebereitstellung,
- einen Wartungsplan,
- eine Ladungskapazität,
- einen Ladestatus,
- eine Ladezyklusanzahl,
- eine Ladegeschwindigkeit,
- eine maximale Leistungsabgabe
- einen Betriebsleistungsbereich,
- eine Nennleistung,
- einen Blindleistungsbereich,
- einen Frequenzbereich,
- einen Spannungsbereich,
- eine Frequenzänderungsrate,
- eine Spannungsasymmetrie,
- eine Frequenzregelung,
- eine aktive Leistungsregelung,
- eine Drehreserve,
- eine Blindleistungsregelung,
- eine Blindleistungsänderungsrate,
- eine Spannungsregelung,
- eine Leistungsspitze,
- eine Trägheitsreaktion,
- eine synthetische Trägheitsreaktion,
- eine Reservewirk-/Blindleistung,
- eine Eigenschaft einer ungeregelten Betriebsart,
- ein Startverhalten nach Stromausfall,
- eine Eigenschaft eines Inselbetriebs,
- eine Resynchronisation,
- einen Turbinenzustand,
- eine aktuelle Windgeschwindigkeit,
- eine aktuelle elektrische Leistung,
- eine aktuelle Blindleistung,
- eine aktuelle Frequenz,
- eine aktuelle Spannung,
- einen Ladezustand,
- eine Information zum Standort,
- einen Turbinentyp
- einen vorhergesagten Betriebszustand für einen zukünftigen Zeitraum, und/oder
- eine vorhergesagte Ausfallzeit.

7. Verfahren nach einem der vorhergehenden Ansprüche, wobei die vorrichtungsspezifische Information eines jeweiligen Smart Contracts eine betreiberspezifische Anforderung eines Betreibers der entsprechenden Vorrichtung definiert.

8. Verfahren nach Anspruch 7, wobei die betreiberspezifische Anforderung eine oder mehrere der folgenden Eigenschaften der entsprechenden Vorrichtung betrifft:
- einen Energiepreis,
- ein Benutzerprofil,
- ein Handelsverhalten,
- eine zeitliche Verfügbarkeit der Vorrichtung, und/oder
- einen zum Handel verfügbaren Energieanteil.

9. Verfahren nach einem der vorhergehenden Ansprüche, wobei Veränderungen im Smart Contract der Vorrichtung im verteilten Datenbanksystem (250) unveränderbar protokoliert werden.

10. Verfahren nach einem der vorhergehenden Ansprüche, wobei die Vorrichtung umfasst:
- eine Windkraftanlage,
- eine Photovoltaikanlage,
- eine Gezeitenkraftanlage,
- einen elektrischen Energiespeicher, und/oder
- ein Elektrofahrzeug mit einem elektrischen Energiespeicher.

11. Vorrichtung in einem Energiesystem, wobei die Vorrichtung eine Vorrichtung aus einer Vielzahl von Vorrichtungen (201-203) in dem Energiesystem (200) ist, wobei in einem mit dem Energiesystem (200) assoziierten verteilten Datenbanksystem (250) Smart Contracts für die Vielzahl von Vorrichtungen (201-203) vorgesehen sind, wobei die Smart Contracts vorrichtungsspezifische Informationen für die entsprechenden Vorrichtungen umfassen, wobei die Vorrichtung umfasst:
- einen Anschluss (231-233) an ein Datennetz (270), um Daten in das verteilte Datenbanksystem (250) einzugeben und um Daten aus dem verteilten Datenbanksystem (250) abzurufen, und
- eine Verarbeitungsvorrichtung (211-213), welche ausgestaltet ist,
mindestens eine aktuelle Betriebsgröße der Vorrichtung zu erfassen,
einen Betriebszustand der Vorrichtung abhängig von der mindestens einen aktuellen Betriebsgröße und Informationen des Smart Contracts der Vorrichtung und Informationen des Smart Contracts von mindestens einer weiteren Vorrichtung der Vielzahl von Vorrichtungen (201-203) einzustellen, und
den Betriebszustand der Vorrichtung in das verteilte Datenbanksystem einzugeben.

12. Vorrichtung nach Anspruch 11, wobei die Vorrichtung zur Durchführung des Verfahrens (400) nach einem der Ansprüche 1-10 ausgestaltet ist.

13. Computerprogrammprodukt, welches ein Programm umfasst und direkt in einen Speicher einer programmierbaren Verarbeitungsvorrichtung (211-213), welche mit einem Datennetz (270) verbindbar ist, ladbar ist, mit Programmmitteln, um alle Schritte des Verfahrens (400) nach einem der Ansprüche 1-10 auszuführen, wenn das Programm in der Verarbeitungsvorrichtung (211-213) ausgeführt wird.

14. Elektronisch lesbarer Datenträger mit darauf gespeicherten elektronisch lesbaren Steuerinformationen, welche derart ausgestaltet sind, dass sie bei Verwendung des Datenträgers in einer Verarbeitungsvorrichtung (211-213), welche mit einem Datennetz (270) verbindbar ist, das Verfahren nach einem der Ansprüche 1-10 durchführen.
